# EUROPEAN PATENT APPLICATION

(11) **EP 2 843 580 A1**
(43) Date of publication of application: **04.03.2015**
(21) Application number: 13199494.9
(22) Date of filing: 23.12.2013
(51) Int. Cl.: G06F 21/43, H04W 4/00, H04L 29/06

(54) **Method for updating network connection parameters**

(30) Priority: 30.08.2013 TW 102131311
(71) Applicant: Arcadyan Technology Corporation, Hsinchu City 300 (TW)
(72) Inventor: Liou, Guan-De, 30075 Hsinchu City (TW); Lee, Chih-Fang, 71745 Tainan City (TW); Lee, Hong-Yuh, 30075 Hsinchu City (TW)
(74) Representative: Lang, Christian

(57) **Abstract**

A method for updating network connection parameters is disclosed, which comprises the steps of: providing a first device having a first NFC module while enabling the first NFC module to have network connection parameters stored therein; providing a handheld mobile device with a built-in NFC module; enabling the handheld mobile device to execute an application program (APP) so as to activate the built NFC module while enabling the NFC module to operate in an read/write mode; and moving the handheld mobile device near to the first device for allowing the network connection parameters stored in the first device to be transferred to the handheld mobile device via the first NFC module and thus stored into the built-in NFC module of the handheld mobile device.

## Description

### FIELD OF THE INVENTION

The present invention relates to a method for updating network connection parameters, and more particularly, to a method for updating network connection parameters by the use of near field communication (NFC) modules.

### BACKGROUND OF THE INVENTION

With rapid advance of wireless communication technology, there are a variety of communication services being provided and available to the public, such as services of digital home, or services of personal mobile office. With the increasing popularity of wireless communication services in our daily life, the demand of wireless resources for enabling connection to the Internet over Wi-Fi and fast cellular data networks is increasing. Currently, such demand is being responded and met by the industry of personal mobile communication device in three ways. First, the demand is met by the integration of communication modules, by that users can conveniently connect to Internet using the optimal communication interface available at the time and place. Secondly, the demand is met by expanding the function of communication devices, especially by enabling mobile communication devices to be equipped with plug-and-play (PnP) ability, by that users can easily connect different mobile communication devices to a common information sharing system for allowing data to be transmitted and shared between those different mobile communication devices in a wireless manner, and thus enabling those mobile communication devices to be used as wireless portable personal information management devices. Finally, the demand is met by the bandwidth sharing ability in communication modules, using that a network bandwidth sharing and management can be supported by an information sharing system for allowing multiple users to share the resources provided on the network while maintaining good bandwidth utilization for each user based upon a service quality evaluation, and eventually achieving an optimum network load balance.

However, it is common to have parameter conflict problem in network connection parameter configurations between handheld mobile devices and network access devices with network modules and/or near field communication (NFC) modules, such as ipad, AP, router, NB, STV, TV.

Therefore, it is in need of a method for updating network connection parameters, that can effectively unify the network connection parameter configurations between handheld mobile devices and network access devices so as to enhance the transfer and use efficiency.

### SUMMARY OF THE INVENTION

In view of the disadvantages of prior art, the primary object of the present invention is to provide a method for updating network connection parameters, which comprises the steps of: providing a first device having a first NFC module while enabling the first NFC module to have network connection parameters stored therein; providing a handheld mobile device with a built-in NFC module; enabling the handheld mobile device to execute an application program (APP) so as to activate the built NFC module while enabling the built-in NFC module to operate in a read/write mode; and moving the handheld mobile device near to the first device for allowing the network connection parameters stored in the first device to be transferred to the handheld mobile device via the first NFC module and thus stored into the built-in NFC module of the handheld mobile device.

Preferably, there are at least two sets of network connection parameters being stored in the first NFC module.

Preferably, the first device further comprises: a first wireless communication module, capable of transmitting/receiving wireless signals to/from a built-in wireless communication module in the handheld mobile device after the built-in wireless communication module is automatically enabled to use the network connection parameters stored in the built-in NFC module of the handheld mobile device to achieve a network connection.

Preferably, the first NFC module is substantially a Type-1 NFC module, which is configured with a reader/writer, an RFID tag/card, an antenna and a memory and is capable of operating in the following operation modes: a read/write mode, a peer-to-peer mode and a tag/card emulation mode.

Preferably, the first NFC module is substantially a Type-2 NFC module, which is configured with a reader/writer, an RFID tag/card, an antenna and a memory and is capable of operating in the following operation modes: a read/write mode, a peer-to-peer mode and a tag/card emulation mode.

Preferably, the first NFC module is substantially a Type-3 NFC module, which is configured with a reader/writer, an antenna and a memory and is capable of operating in a tag/card emulation mode.

Preferably, the built-in NFC module of the handheld mobile device is a device selected from the group consisting of: a Type-1 NFC module and a Type-2 NFC module.

Preferably, the method for updating network connection parameters further comprises the steps of: providing a second device; enabling the handheld mobile device to execute the APP while further enabling the built-in NFC module to operate in a write mode; and moving the handheld mobile device near to the second device for allowing the network connection parameters stored in the handheld mobile device to be transferred to and stored in the second device.

Preferably, the method for updating network connection parameters further comprises the steps of: providing a second device; enabling the handheld mobile device to execute the APP while further enabling the built-in NFC module to operate in a peer-to-peer mode; and moving the handheld mobile device near to the second device for allowing the network connection parameters stored in the handheld mobile device to be transferred to and stored in the second device.

Preferably, the second device further comprises: a second NFC module, and after the handheld mobile device is moved and located near to the second device, the network connection parameters stored in the handheld mobile device is enabled to be transmitted to and thus stored in the second NFC module of the second device via the built-in NFC module of the handheld mobile device.

Preferably, the second device further comprises: a second wireless communication module, capable of transmitting/receiving wireless signals to/from a built-in wireless communication module in the handheld mobile device after the built-in wireless communication module is automatically enabled to use the network connection parameters stored in the built-in NFC module of the handheld mobile device to achieve a network connection.

Preferably, the second NFC module of the second device is a device selected from the group consisting of: a Type-1 NFC module and a Type-2 NFC module.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is a schematic diagram showing a network connection parameter updating system according to an embodiment of the present invention.
FIG. 2 is a flow chart depicting steps performed in a method for updating network connection parameters according to an embodiment of the present invention.

### DESCRIPTION OF THE EXEMPLARY EMBODIMENTS

For your esteemed members of reviewing committee to further understand and recognize the fulfilled functions and structural characteristics of the invention, several exemplary embodiments cooperating with detailed description are presented as the follows.

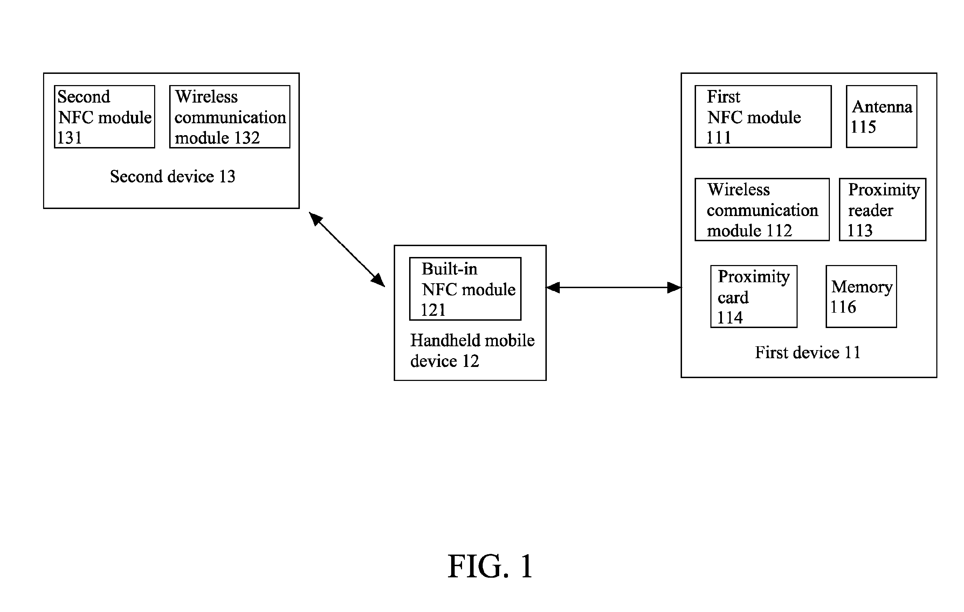

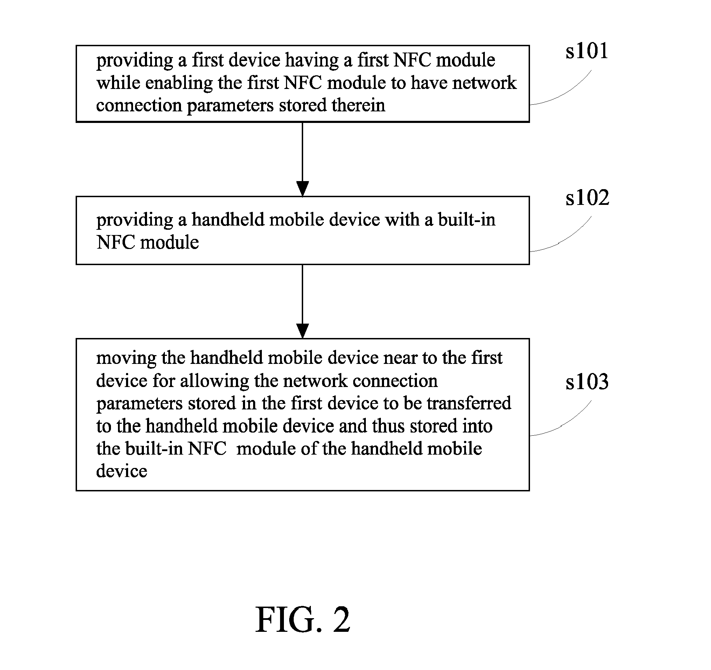

FIG. 1 is a schematic diagram showing a network connection parameter updating system according to an embodiment of the present invention, and FIG. 2 is a flow chart depicting steps performed in a method for updating network connection parameters according to an embodiment of the present invention. The following embodiment depict steps of FIG. 2 that are performed in the system shown in FIG. 1. According to the embodiment shown in FIG. 1 and FIG. 2, the method for updating network connection parameters starts from the step s101. At step s101, a first device 11 having a first NFC module 111 is provided, whereas the first NFC module 111 already has network connection parameters stored therein that can be used for achieve a network connection; and then the flow proceeds to step s102. At step s102, a handheld mobile device 12 with a built-in NFC module 121 is provided, and then the handheld mobile device 12 is enabled to execute an application program (APP) so as to activate the built NFC module 121 while enabling the built-in NFC module 121 to operate in a read/write mode; and then the flow proceeds to step s103. At step s103, the handheld mobile device 12 is moved and located near to the first device 11 for allowing the network connection parameters stored in the first device 11 to be transferred to the handheld mobile device 12 and thus stored into the built-in NFC module 121 of the handheld mobile device 12. Moreover, the first device 11 further comprises: a first wireless communication module 112, and the first NFC module 111 is substantially a Type-1 NFC module, which is configured with a reader/writer 113, an RFID tag/card 114, an antenna 115 and a memory 116 and is capable of operating in the following operation modes: a read/write mode, a peer-to-peer mode and a tag/card emulation mode. In another embodiment, the first NFC module 111 can be a Type-2 NFC module, which is configured with a reader/writer 113, an RFID tag/card 114, an antenna 115 and a memory 116 and is capable of operating in the following operation modes: a read/write mode, a peer-to-peer mode and a tag/card emulation mode, or even the first NFC module 111 can be a Type-3 NFC module, which is configured with an RFID tag/card 114, an antenna 115 and a memory 116 and is capable of operating in a tag/card emulation mode.

In addition, the method for updating network connection parameters of the present embodiment further comprises the steps of: providing a second device 13; enabling the handheld mobile device 12 to execute the APP while further enabling the built-in NFC module 121 to operate in a write mode; and moving the handheld mobile device 12 near to the second device 13 for allowing the network connection parameters stored in the handheld mobile device 12 to be transferred to and stored in the second device 13. The second device 13 is configured with a second NFC module 131 and a second wireless communication module 132.

Moreover, the method for updating network connection parameters can further comprise the steps of: providing a second device 13; enabling the handheld mobile device 12 to execute the APP while further enabling the built-in NFC module 121 to operate in a peer-to-peer mode; and moving the handheld mobile device 12 near to the second device 13 for allowing the network connection parameters stored in the handheld mobile device 12 to be transferred to and stored in the second device 13. The second device 13 is configured with a second NFC module 131 and a second wireless communication module 132. The second device 13 is configured with a second NFC module 131 and a second wireless communication module 132, whereas the second NFC module 131 of the second device 13 is a device selected from the group consisting of: a Type-1 NFC module and a Type-2 NFC module.

The near field communication (NFC) module used in the present invention can substantially be a chip integrated with functions of a reader/writer, a RFID tag/card and a point-to-point function that can be used in devices, such as smartphones and similar devices, to establish radio communication with each other by touching them together or bringing them into close proximity, usually no more than a few centermeters (in most cases, within 15 cm) and using a frequency ranged within 13.56 MHz. Present and anticipated applications include contactless transactions, data exchange, and simplified setup of more complex communications such as WiFi. Communication is also possible between an NFC device and an unpowered NFC chip, called a "tag". Two-way communication between endpoints enabled by NFC devices, such as contactless smart cards can be secured since comfidential data is stored in a specific zone of a secure memory bulit in the contactless smart cards which can only be access thorugh the authorization of the NFC devices and then the data being access is encrypted by the pin code registered in the secure memory.

The NFC device is programmed with three operation modes, as following: (1) read/write mode: that is used when an NFC-enabled cell phone is enable to access data stored in another NFC-enabled cell phone, such as downloading coupons, commercials, bus schedule, menu, travel information, ringtones, etc.; (2) peer-to-peer mode: that is used when a NFC-enabled cell phone is enabled to transmit a small amount data to another NFC-enabled cell phone, such as exchanging electronic name cards, sending game points as a gift, and so on; (3) tag/card emulation mode, that is used for allowing a NFC-enabled cell phone to be used as a smart card, such as a traffic tickets, an access card, a card key, a credit card, and so on.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

## Claims

1. A method for updating network connection parameters, comprising the steps of:
providing a first device having a first NFC module while enabling the first NFC module to have network connection parameters stored therein;
providing a handheld mobile device with a built-in NFC module;
enabling the handheld mobile device to execute an application program (APP) so as to activate the built NFC module while enabling the built-in NFC module to operate in a read/write mode; and
moving the handheld mobile device near to the first device for allowing the network connection parameters stored in the first device to be transferred to the handheld mobile device and thus stored into the built-in NFC module of the handheld mobile device.

2. The method of claim 1, wherein the first device further comprises: a first wireless communication module.

3. The method of claim 1, wherein the first NFC module is substantially a Type-1 NFC module, which is configured with a reader/writer, an RFID tag/card, an antenna and a memory and is capable of operating in the following operation modes: a read/write mode, a peer-to-peer mode and a tag/card emulation mode.

4. The method of claim 1, wherein the first NFC module is substantially a Type-2 NFC module, which is configured with a reader/writer, an RFID tag/card, an antenna and a memory and is capable of operating in the following operation modes: a read/write mode, a peer-to-peer mode and a tag/card emulation mode.

5. The method of claim 1, wherein the first NFC module is substantially a Type-3 NFC module, which is configured with an RFID tag/card, an antenna and a memory and is capable of operating in a tag/card emulation mode.

6. The method of claim 3 or 4, wherein the built-in NFC module of the handheld mobile device is a device selected from the group consisting of: a Type-1 NFC module and a Type-2 NFC module.

7. The method of claim 1, wherein there are at least two sets of network connection parameters being stored in the first NFC module.

8. The method of claim 6, further comprising the steps of:
providing a second device;
enabling the handheld mobile device to execute the APP while further enabling the built-in NFC module to operate in a write mode; and
moving the handheld mobile device near to the second device for allowing the network connection parameters stored in the handheld mobile device to be transferred to and stored in the second device.

9. The method of claim 8, wherein the second device is configured with a second NFC module and a second wireless communication module.

10. The method of claim 6, further comprising the steps of:
providing a second device;
enabling the handheld mobile device to execute the APP while further enabling the built-in NFC module to operate in a peer-to-peer mode; and
moving the handheld mobile device near to the second device for allowing the network connection parameters stored in the handheld mobile device to be transferred to and stored in the second device.

11. The method of claim 9, wherein the second NFC module of the second device is a device selected from the group consisting of: a Type-1 NFC module and a Type-2 NFC module.
